# EUROPEAN PATENT APPLICATION

(11) **EP 4 675 786 A1**
(43) Date of publication of application: **07.01.2026**
(21) Application number: 24211931.1
(22) Date of filing: 08.11.2024
(51) Int. Cl.: H01M 50/204, H01M 50/209, H01M 50/249, H01M 50/271, H01M 50/367

(54) **BATTERY MODULE AND AUTOMOBILE**

(30) Priority: 03.07.2024 CN 202421563942 U; 02.08.2024 WO PCT/CN2024/109362
(71) Applicant: Eve Energy Co., Ltd., Huizhou, Guangdong 516006 (CN)
(72) Inventor: HUANG, Weicai, Huizhou, 516006 (CN)
(74) Representative: HGF

(57) **Abstract**

Provided is a battery module including a box body (1), cells (2), a box cover (3) and a supporting member (4). The box body (1) is concavely provided with an accommodation groove (11). Multiple cells (2) are disposed side by side in a first direction to form a cell group (20), and the cell group (20) is disposed within the accommodation groove (11). The box cover (3) is arranged to block a groove opening of the accommodation groove (11). The supporting member (4) is disposed between the box cover (3) and the cell group (20), a pressure relief groove (41) is disposed on the supporting member (4), the supporting member (4) includes a substrate (42) and a first reinforcing portion (43), the first reinforcing portion (43) abuts against the box cover (3); at least part of the pressure relief groove (41) is disposed within the first reinforcing portion (43).

## Description

### TECHNICAL FIELD

The present application relates to the technical field of batteries, for example, a battery module and an automobile.

### BACKGROUND

Vehicles are in the period of energy conversion, new energy vehicles are increasingly expanded, and a lithium ion power automobile is one of representatives of the new energy automobile. However, the key technology of the lithium ion power automobile is a lithium ion battery, and many factors need to be considered in the design of the lithium ion power automobile, so that it is ensured that on the one hand, the performance of the battery can satisfy the requirements of the automobile, and that on the other hand, the battery has enough safety and reliability.

### Technical problem

In consideration of factors such as weight reduction and cost reduction, a battery module is usually integrated directly on a vehicle frame of the automobile, and a box cover of the battery module is used as a floor of a passenger compartment of the automobile. However, passengers may step on the vehicle, when the box cover is used as the floor of the passenger compartment of the automobile, the box cover is easy to be deformed by stepping due to insufficient supporting strength of the box cover so that the product quality is difficult to be ensured.

### SUMMARY

### Technical solution

The present application provides a battery module and an automobile, which are simple in structure and are strong in supporting performance of a box cover.

In a first aspect, a battery module is provided. The battery module includes a box body, multiple cells, a box cover and a supporting member. The box body is concavely provided with an accommodation groove. The multiple cells are disposed side by side in a first direction to form a cell group, where the cell group is disposed within the accommodation groove. The box cover is arranged to block a groove opening of the accommodation groove. The supporting member is disposed between the box cover and the cell group, a pressure relief groove is disposed on the supporting member, a length of the pressure relief groove extends in the first direction, the supporting member includes a substrate and a first reinforcing portion, the first reinforcing portion is disposed on a side of the substrate towards the box cover, the first reinforcing portion abuts against a side surface of the box cover facing the cell group, a length of the first reinforcing portion extends in the first direction, at least part of the pressure relief groove is disposed within the first reinforcing portion, and pressure relief valves of all cells communicate with the pressure relief groove.

In a second aspect, an automobile is provided. The automobile includes a vehicle frame and the battery module described in the first aspect. The battery module is detachably connected to a bottom of the vehicle frame, and a box cover of the battery module is a bottom plate of the automobile.

### Beneficial effects

The beneficial effects of the present application are as follows. The supporting member is provided so that the support of the box cover by the first reinforcing portion can be effectively strengthened, thereby improving the supporting strength of the box cover, reducing the magnitude of deformation caused by the stepping of the driver, and ensuring the product quality of the battery module. The pressure relief groove is disposed on the supporting member, and the pressure relief groove is always partially disposed within the first reinforcing portion, so that on the one hand, the weight reduction of the supporting member can be achieved, and the use of materials is reduced to achieve the cost reduction; on the other hand, the pressure relief groove communicates with the pressure relief valve of the cell so that a high-temperature gas and a flame can be discharged from the pressure relief channel when the cell is subjected to thermal runaway, thereby reducing the occurrence of the situation of thermal runaway propagation of the battery module caused by blockage of the pressure relief valve, and thus improving the usage safety of the battery module.

### BRIEF DESCRIPTION OF THE DRAWINGS

FIG. 1 is a schematic structural diagram of a battery module according to an embodiment of the present application;
FIG. 2 is a cross-sectional view of a battery module according to an embodiment of the present application;
FIG. 3 is an exploded view of a battery module according to an embodiment of the present application;
FIG. 4 is a schematic structural diagram of a supporting member according to an embodiment of the present application;
FIG. 5 is a schematic structural diagram of a supporting member according to another embodiment of the present application;
FIG. 6 is an exploded view of a supporting member according to another embodiment of the present application;
FIG. 7 is an enlarged schematic view at A in FIG. 6; and
FIG. 8 is an enlarged schematic view at B in FIG. 6.

### List of reference numbers

- 1: box body
- 11: accommodation groove
- 2: cell
- 20: cell group
- 3: box cover
- 4: supporting member
- 41: pressure relief groove
- 42: substrate
- 43: first reinforcing portion
- 431: body portion
- 432: connection portion
- 44: second reinforcing portion
- 45: first adhesive groove
- 46: communication port
- 47: limiting groove
- 48: mounting opening
- 5: structural adhesive
- 6: conductive sheet
- 7: mounting beam
- 8: vehicle frame

### DETAILED DESCRIPTION

The present application will be further described in detail in conjunction with drawings and embodiments below. It is to be understood that specific embodiments described herein are used for explaining the present application and are not intended to limit the present application. It is also to be noted that, for ease of description, only some, but not all, of the structures related to the present application are shown in the drawings.

In the description of the present application, terms "joined", "connected" and "fixed" are to be understood in a broad sense unless otherwise expressly specified and limited. For example, the term "connected" may refer to "securely connected", "detachably connected" or "integrated", may refer to "mechanically connected" or "electrically connected", or may refer to "connected directly", "connected indirectly through an intermediary" or "internal connection between two elements or interaction between two elements". For those of ordinary skill in the art, meanings of the preceding terms in the present application may be understood based on situations.

In the present application, unless otherwise expressly specified and limited, a first feature being "on" or "under" a second feature may include the first feature and the second feature being in direct contact, or may include the first feature and the second feature not being in direct contact but being in contact with each other through an additional feature between the first feature and the second feature. Moreover, the first feature being "on", "above" or "over" the second feature includes the first feature being directly on, above or over and obliquely on, above or over the second feature, or simply indicates that the first feature is at a higher level than the second feature. The first feature being "under", "below" or "underneath" the second feature includes the first feature being directly under, below or underneath and obliquely under, below or underneath the second feature, or simply represents that the first feature is at a lower level than the second feature.

In the description of this embodiment, the orientation or position relationships indicated by terms "above", "below", "right" and the like are based on the orientation or position relationships shown in the drawings, merely for ease of description and simplifying an operation, these relationships do not indicate or imply that the referred device or element has a specific orientation and is constructed and operated in a specific orientation, and thus it is not to be construed as limiting the present application. In addition, the terms "first" and "second" are used to distinguish between descriptions and have no special meaning.

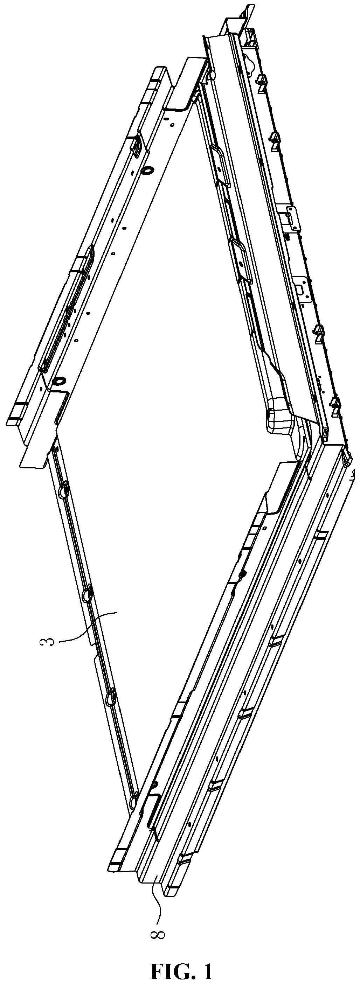

As shown in FIG. 1, FIG. 2 and FIG. 3, a battery module of an embodiment of the present application includes a box body 1, multiple cells 2, a box cover 3 and a supporting member 4. The box body 1 is concavely provided with an accommodation groove 11. The multiple cells 2 are disposed side by side in a first direction to form a cell group 20 (the first direction is an X direction shown in the drawings), and the cell group 20 is disposed within an accommodation groove 11. The box cover 3 is arranged to block a groove opening of the accommodation groove 11. The supporting member 4 is disposed between the box cover 3 and the cell group 20. A pressure relief groove 41 is disposed on the supporting member 4, and a length of the pressure relief groove 41 extends in the first direction and penetrates through two sides of the supporting member 4 in the first direction. The supporting member 4 includes a substrate 42 and a first reinforcing portion 43. The first reinforcing portion 43 is disposed on a side of the substrate 42 towards the box cover 3. The first reinforcing portion 43 abuts against a side surface of the box cover 3 facing the cell group 20, a length of the first reinforcing portion 43 extends in the first direction, at least part of the pressure relief groove 41 is disposed within the first reinforcing portion 43, and pressure relief valves of all cells 2 communicate with the pressure relief groove 41.

The supporting member 4 is provided so that the support of the box cover 3 by the first reinforcing portion 43 can be effectively strengthened, thereby improving the supporting strength of the box cover 3, reducing the magnitude of deformation caused by the stepping of the driver, and ensuring the product quality of the battery module. The pressure relief groove 41 is disposed on the supporting member 4, and the pressure relief groove 41 is always partially disposed within the first reinforcing portion 43, so that on the one hand, the weight reduction of the supporting member 4 can be achieved, the use of materials is reduced to achieve the cost reduction; on the other hand, the pressure relief groove 41 communicates with the pressure relief valve of the cell 2, so that a high-temperature gas and a flame can be discharged from the pressure relief channel in time when the cell 2 is subjected to thermal runaway, thereby reducing the occurrence of the situation of thermal runaway propagation of the battery module caused by blockage of the pressure relief valve, and thus improving the usage safety of the battery module.

The length of the pressure relief groove 41 extends in the first direction and penetrates through at least one side surface arranged in the first direction of the supporting member 4, that is, the pressure relief groove 41 extends in the first direction and penetrates through two sides arranged in the first direction of the supporting member 4, and two ends of the pressure relief groove 41 in the first direction may communicate with an outside, so that a thermal runaway gas can be discharged in time, whereby an explosion caused by accumulation in the battery module is avoided, and the emission effect of the thermal runaway gas is good. The length of the pressure relief groove 41 extends in the first direction and only penetrates through one side surface arranged in the first direction of the supporting member 4, that is, one end of the pressure relief groove 41 in the first direction can communicate with the outside for emission of the thermal runaway gas. In addition, the length of the pressure relief groove 41 extends in the first direction and does not penetrate through the supporting member 4, and a communication port communicating with the outside and the pressure relief groove 41 is disposed on the supporting member 4 for emission of the thermal runaway gas; therefore, the structural strength of the supporting member 4 can be ensured effectively through this structural design.

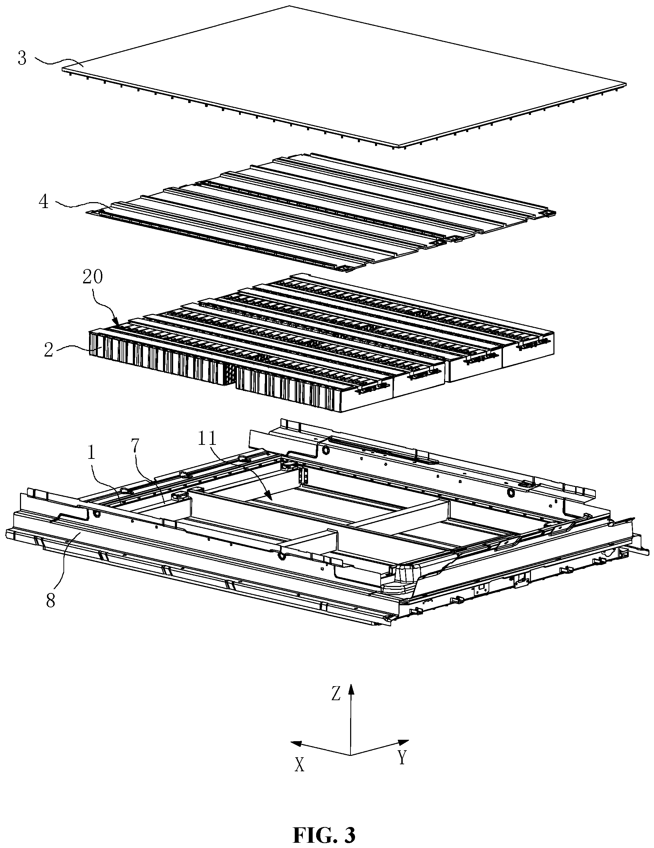

In this embodiment, as shown in FIG. 3, FIG. 4 and FIG. 5, the supporting member 4 further includes a second reinforcing portion 44. At least one second reinforcing portion 44 is disposed at each of two ends of the substrate 42 adjacent to the cell group 20 in a second direction (the second direction is a Y direction shown in the drawings), and a length of the second reinforcing portion 44 extends in the first direction, and the second reinforcing portion 44 abuts against a side surface of the box cover 3 facing the cell group 20, where the first direction and the second direction are disposed at an included angle. The second reinforcing portion 44 is provided so that the support of the box cover 3 can be strengthened, thereby making the box cover 3 have the multi-point support to ensure the balance of overall support of the box cover 3. In this embodiment, one second reinforcing portion 44 is disposed on each of two sides of the first reinforcing portion 43 in the second direction to implement the three-point support of the box cover 3. In other embodiments, when the use of a top structure of the cell group 20 is not affected, multiple second reinforcing portions 44 may be correspondingly disposed to ensure the support of the box cover 3.

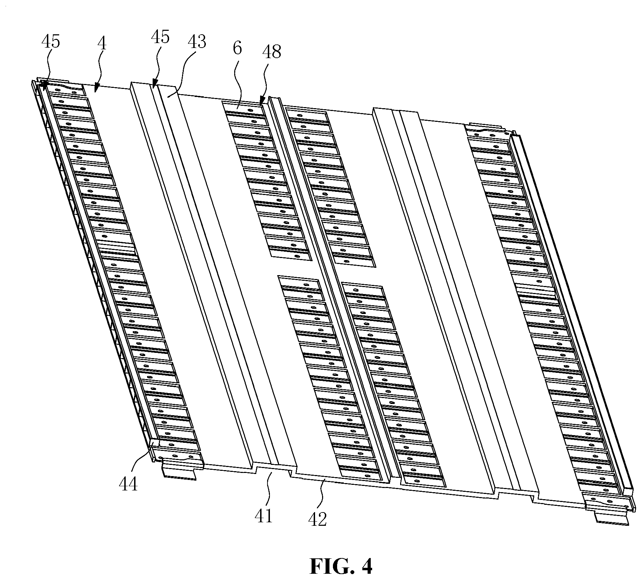

In some embodiments, as shown in FIG. 4, the substrate 42, the first reinforcing portion 43 and the second reinforcing portion 44 are integrally formed, for example, are integrally injection molded. The integrally formed structure is high in strength and convenient to produce.

When the substrate 42 and the first reinforcing portion 43 are integrally formed, the pressure relief groove 41 is disposed on a side of the substrate 42 towards the cell group 20, and a depth of the pressure relief groove 41 extends in a third direction into the first reinforcing portion 43 (the third direction is a Z direction shown in the drawings), where the first direction, the second direction and the third direction are disposed at an included angle to each other. In this embodiment, the first direction, the second direction and the third direction are disposed perpendicularly to each other, this structure is adopted so that the forming is convenient, the wholeness is strong, and thus the production efficiency of the supporting member 4 can be improved effectively.

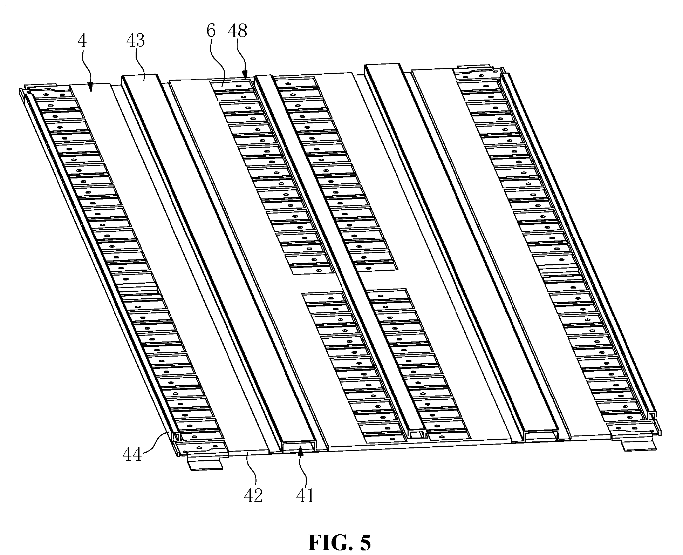

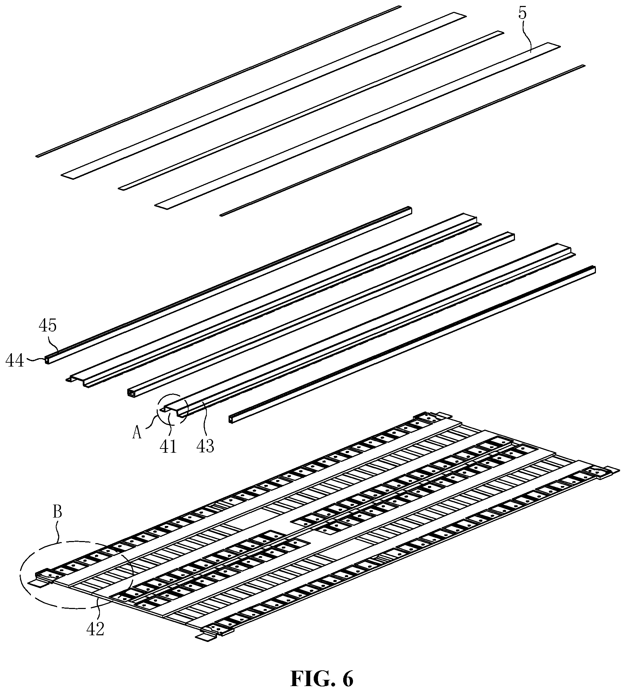

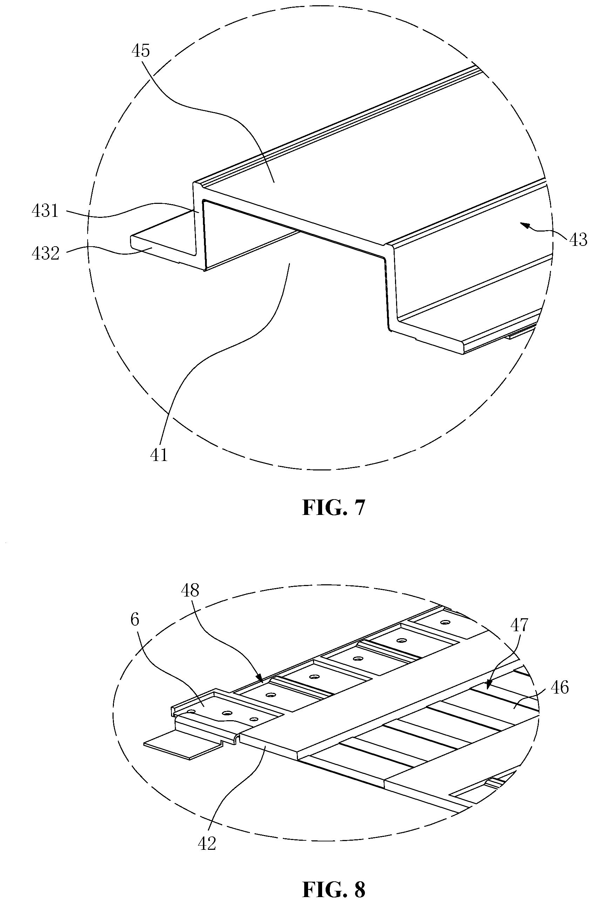

In another some embodiments, as shown in FIG. 5, FIG. 6, FIG. 7 and FIG. 8, the substrate 42, the first reinforcing portion 43 and the second reinforcing portion 44 are detachably connected. The split-type setting is adopted so that the produce difficulty of parts is relatively low, it is convenient to produce, and later maintenance and replacement cost is relatively lower.

In some embodiments, the first reinforcing portion 43 and the second reinforcing portion 44 are separately glued to the substrate 42 in that the glued connection is stable, and the disassembly and assembly are convenient. In addition, the first reinforcing portion 43 and the second reinforcing portion 44 may also adopt a bracket formed by extrusion molding of a combination material of glass fiber and epoxy resin, and the bracket has good flame retardancy and higher strength.

The substrate 42 is detachably connected to the first reinforcing portion 43, the first reinforcing portion 43 includes a body portion 431 and a connection portion 432. A length of the body portion 431 extends in the first direction, a pressure relief groove 41 is concavely disposed on a side of the body portion 431 towards the cell group 20, and the connection portion 432 is convexly disposed on each of two sides of the body portion 431 in the second direction. The connection portion 432 is adjacent to a side provided with the pressure relief groove 41 of the body portion 431, and the connection portion 432 is detachably connected to the substrate 42. Multiple communication ports 46 are disposed on the substrate 42 in a penetrating manner, and the pressure relief valve communicates with the pressure relief groove 41 via the communication port 46. The first reinforcing portion 43 is simple in structure and is convenient in connection. When the cell 2 is subjected to thermal runaway, a high-pressure thermal runaway gas can break through the pressure relief valve, and enter the pressure relief groove 41 through the communication port 46 for pressure relief. In this embodiment, the first reinforcing portion 43 is adhesively connected to the substrate 42, a third adhesive groove is disposed on a bottom side of the connection portion 432 of the first reinforcing portion 43, and the third adhesive groove is arranged to accommodate a structural adhesive 5. The third adhesive groove is provided so that the structural adhesive 5 can be limited, and thus the offset of the structural adhesive 5 can be reduced.

To reduce the weight of the second reinforcing portion 44 when the second reinforcing portion 44 is independently disposed, the second reinforcing portion 44 may be hollow disposed, that is, a through groove is disposed within the second reinforcing portion 44. The through groove extends in the first direction and penetrates through two sides of the second reinforcing portion 44 in the first direction, that is, the second reinforcing portion 44 is a tubular structure with a cross section of a hollow square. The forming of the second reinforcing portion 44 is facilitated and the material consumption is relatively less by using the structural arrangement.

A limiting groove 47 is concavely disposed on the substrate 42, and a length of the limiting groove 47 extends in the first direction. One end of the connection portion 432 adjacent to the cell group 20 and one end of the body portion 431 adjacent to the cell group 20 are bonded to a groove bottom of the limiting groove 47. Multiple communication ports 46 are disposed on the groove bottom of the limiting groove 47 in a penetrating manner, a projection of a communication port of the multiple communication ports 46 in a third direction is located within the pressure relief groove 41, and a pressure relief valve of each cell 2 is correspondingly provided with one communication port 46, where the first direction, the second direction and the third direction are disposed at an included angle to each other. The limiting groove 47 is provided so that a limitation of a mounting position of the first reinforcing portion 43 can be strengthened, and the precision of the mounting position of the first reinforcing portion 43 can be improved, that is, the precision of a relative position of the pressure relief groove 41 and the pressure relief valve of the cell 2 can be ensured, and moreover, a height of the supporting member 4 in the third direction can also be reduced, thereby reducing the overall occupation space of the whole battery module. The number of communication ports 46 is in one-to-one correspondence with the number of cells 2 so that the structural strength of the connection between the substrate 42 and two sides of the communication port 46 in the second direction can be ensured, and a pressure relief port of each cell 2 can be ensured to separately communicate with a pressure relief channel, thereby avoiding affecting adjacent cells when one cell 2 is subject to thermal runaway.

A first adhesive groove 45 is concavely disposed on a side of the first reinforcing portion 43 and the second reinforcing portion 44 towards the box cover 3. A length of the first adhesive groove 45 extends in the first direction, and the first adhesive groove 45 is disposed to accommodate the structural adhesive 5. The structural adhesive 5 is provided so that the connection strength of the first reinforcing portion 43, the second reinforcing portion 44 and the box cover 3 can be strengthened, the occurrence of the box cover 3 being subsequently impacted or extruded in a vibration environment due to gaps between structures is avoided, thereby enhancing the structural stability between the reinforcing portion and the box cover 3. Moreover, the first adhesive groove 45 is provided so that the structural adhesive 5 can be limited, the position stability of the structural adhesive 5 can be improved, and a situation such as glue overflow or offset can be avoided. In some embodiments, the first adhesive groove 45 may be disposed only on the first reinforcing portion 43 or only on the second reinforcing portion 44.

In addition, multiple second adhesive grooves are disposed on the side of the substrate 42 towards the cell group 20, a length of the second adhesive groove extends in the first direction, and the second adhesive groove is arranged to accommodate the structural adhesive 5. The structural adhesive 5 is provided so that the connection strength between the substrate 42 and the cell group 20 is enhanced, and thus a jigging gap between the supporting member 4 and the cell group 20 is reduced. Moreover, the structural adhesive 5 may be used to connect the multiple cells 2 in the cell group 20 together to reduce jigging between the multiple cells 2, thereby improving the overall structural stability of the battery module.

When the second reinforcing portion 44 and the substrate 42 are detachably disposed, except that the second adhesive groove is disposed on the side of the substrate 42 towards the cell group 20, the second adhesive groove 44 may also be disposed on a side of the second reinforcing portion 44 towards the cell group 20 so that the second reinforcing portion 44 is connected to each of the cell group 20, the substrate 42 and the box cover 3 into a whole by using the structural adhesive 5, thereby improving the connection strength and the position stability of the second reinforcing portion 44.

In this embodiment, the battery module further includes a conductive sheet 6. The supporting member 4 is an insulating supporting member. A mounting opening 48 is disposed in a penetrating manner at a position of the supporting member 4 relative to a pole post of the cell 2, the conductive sheet 6 is disposed on the supporting member 4, and part of the conductive sheet 6 penetrates through the mounting opening 48 to connect to the pole post of the cell 2. The supporting member 4 is disposed as the insulating supporting member, so that multiple conductive sheets 6 that are connected in series or in parallel between the multiple cells 2 can be mounted on the supporting member 4. That is, the supporting member 4 is used as an isolation plate of a cell connection system (CCS) of the battery module and is arranged to mount the conductive sheet 6 and a sampling wire bundle, thereby improving the use functionality of the supporting member 4.

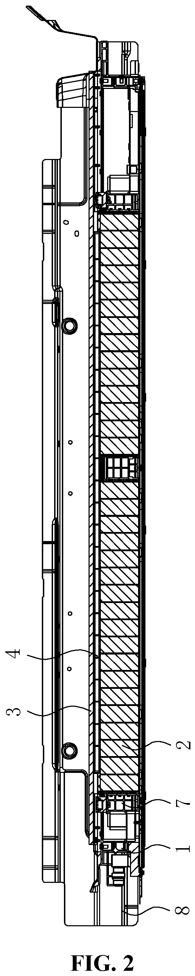

As shown in FIG. 1 and FIG. 2, a mounting beam 7 is disposed on two sides of the cell group 20 in the first direction, a length of the mounting beam 7 extends in the second direction, and the supporting member 4 is connected to the mounting beam 7, where the first direction and the second direction are disposed at an included angle. The mounting beam 7 is provided so that the supporting strength of the supporting member 4 is strengthened, and thus the supporting strength of the box cover 3 by the supporting member 4 is ensured. In this embodiment, a size of the mounting beam 7 in the third direction is consistent with a size of the cell 2 in the third direction, that is, the supporting member 4 simultaneously abuts against the cell group 20 and the mounting beam 7, thereby ensuring the overall structural support of the supporting member 4.

When battery module is provided with the mounting beam 7, the battery module further includes foam. The foam is disposed on the mounting beam 7, and a side of the foam facing away from the mounting beam 7 abuts against the box cover3. The foam is provided so that the supporting intensity of the box cover 3 may be improved by using the support of the box cover 3 by the mounting beam 7.

The battery module further includes a mica paper. The mica paper is pasted within the pressure relief groove 41. The mica paper has an electrical insulation property, a high temperature resistant property and a corrosion resisting property to effectively prevent the flame sprayed out by the pressure relief valve from stretching when the core 2 is subjected to thermal runaway, thereby improving the overall use safety of the battery module.

As shown in FIG. 1 to FIG. 8, an embodiment of this application further provides an automobile. The automobile includes a vehicle frame 8 and the battery module described in any of the embodiments of the present application. The battery module may be detachably connected to a bottom of the vehicle frame 8, and the box cover 3 of the battery module is a bottom plate of the automobile. The supporting member 4 of the battery module is provided so that the first reinforcing portion 43 can effectively strengthen the support of the box cover 3, thereby improving the supporting strength of the box cover 3, that is, improving the strength of the bottom plate of the automobile, preventing the occurrence of deformation caused by the stepping of the driver, and ensuring the product quality of the automobile.

## Claims

1. A battery module, comprising:
a box body (1), wherein the box body (1) is concavely provided with an accommodation groove (11);
a plurality of cells (2), wherein the plurality of cells (2) are disposed side by side in a first direction to form a cell group (20), and the cell group (20) is disposed within the accommodation groove (11);
a box cover (3), wherein the box cover (3) is arranged to block a groove opening of the accommodation groove (11); and
a supporting member (4), wherein the supporting member (4) is disposed between the box cover (3) and the cell group (20), wherein a pressure relief groove (41) is disposed on the supporting member (4), a length of the pressure relief groove (41) extends in the first direction, the supporting member (4) comprises a substrate (42) and a first reinforcing portion (43), the first reinforcing portion (43) is convexly disposed on a side of the substrate (42) towards the box cover (3), the first reinforcing portion (43) abuts against a side surface of the box cover (3) facing the cell group (20), a length of the first reinforcing portion (43) extends in the first direction, at least part of the pressure relief groove (41) is disposed within the first reinforcing portion (43), and pressure relief valves of all the plurality of cells (2) communicate with the pressure relief groove (41).

2. The battery module of claim 1, wherein the supporting member (4) further comprises second reinforcing portions (44), at least one of the second reinforcing portions (44) is disposed on each of two ends of the substrate (42) adjacent to the cell group (20) in a second direction, a length of the second reinforcing portion (44) extends in the first direction, and the second reinforcing portion (44) is arranged to abut against the side surface of the box cover (3) facing the cell group (20), wherein the first direction and the second direction are disposed at an included angle.

3. The battery module of claim 2, wherein the substrate (42), the first reinforcing portion (43) and the second reinforcing portions (44) are integrally formed; or
the substrate (42), the first reinforcing portion (43) and the second reinforcing portions (44) are detachably connected.

4. The battery module of claim 2 or 3, wherein at least one of the following is satisfied:
at least one of the first reinforcing portion (43) or the second reinforcing portions (44) towards a side of the box cover (3) and is concavely provided with at least one first adhesive groove (45), a length of the first adhesive groove (45) extends in the first direction, and the first adhesive groove (45) is arranged to accommodate a structural adhesive (5); or
a plurality of second adhesive grooves are disposed on a side of the substrate (42) towards the cell group (20), a length of each second adhesive groove of the plurality of second adhesive grooves extends in the first direction, and the plurality of second adhesive grooves are arranged to accommodate a structural adhesive (5).

5. The battery module of any one of claims 2 to 4, wherein the substrate (42) is detachably connected to the first reinforcing portion (43), the first reinforcing portion (43) comprises a body portion (431) and a connection portion (432), the body portion (431) extends in the first direction, a side of the body portion (431) towards the cell group (20) is provided with the pressure relief groove (41), each of two sides of the body portion (431) is convexly provided with the connection portion (432) in the second direction, the connection portion (432) is detachably connected to the substrate (42), the substrate (42) is provided with a plurality of communication ports (46) in a penetrating manner, and the pressure relief valves communicate with the pressure relief groove (41) via the plurality of communication ports (46).

6. The battery module of claim 5, wherein the substrate (42) is concavely provided with a limiting groove (47), a length of the limiting groove (47) extends in the first direction, and one end of the connection portion (432) adjacent to the cell group (20) and one end of the body portion (431) adjacent to the cell group (20) are bonded to a groove bottom of the limiting groove (47), the groove bottom of the limiting groove (47) is provided with the plurality of communication ports (46) in a penetrating manner, a projection of a communication port of the plurality of communication ports (46) in a third direction is located within the pressure relief groove (41), and the pressure relief valve of each of the plurality of cells (2) is correspondingly provided with one of the plurality of communication ports (46), wherein the first direction, the second direction and the third direction are disposed at an included angle to each other.

7. The battery module of any one of claims 2 to 4, wherein the substrate (42) and the first reinforcing portion (43) are integrally formed, the pressure relief groove (41) is disposed on a side of the substrate (42) towards the cell group (20), and a depth of the pressure relief groove (41) extends into the first reinforcing portion (43) in a third direction, wherein the first direction, the second direction and the third direction are disposed at an included angle to each other.

8. The battery module of any one of claims 1 to 7, wherein the length of the pressure relief groove (41) extends in the first direction and penetrates through at least one side surface of the supporting member (4) arranged in the first direction.

9. The battery module of any one of claims 1 to 7, further comprising a conductive sheet (6), wherein the supporting member (4) is an insulating supporting member, a mounting opening (48) is disposed in a penetrating manner at a position of the supporting member (4) relative to a pole post of a cell of the plurality of cells (2), the conductive sheet (6) is disposed on the supporting member (4), and part of the conductive sheet (6) penetrates through the mounting opening (48) to be connected to the pole post of the cell of the plurality of cells (2).

10. The battery module of any one of claims 1 to 7, wherein at least one of the following is satisfied:
the supporting member (4) abuts against the cell group (20);
the battery module further comprises mounting beams (7), each of two sides of the cell group (20) in the first direction is provided with a mounting beams (7), a length of the mounting beam (7) extends in a second direction, and the supporting member (4) is connected to the mounting beam (7), wherein the first direction and the second direction are disposed at an included angle; or
the battery module further comprises a mica paper, and the mica paper is pasted into the pressure relief groove (41).

11. The battery module of any one of claims 1 to 7, further comprising mounting beams (7) and foam, each side of two sides of the cell group (20) in the first direction is provided with a mounting beam (7), a length of the mounting beam (7) extends in a second direction, the supporting member (4) is connected to the mounting beam (7), the foam is disposed on the mounting beam (7), and a side of the foam facing away from the mounting beam (7) abuts against the box cover (3), wherein the first direction and the second direction are disposed at an included angle.

12. The battery module of any one of claims 1 to 7, wherein the length of the pressure relief groove (41) extends in the first direction and does not penetrate through the supporting member (4), and a communication port communicating with the outside and the pressure relief groove (41) is disposed on the supporting member (4) for emission of a thermal runaway gas.

13. The battery module of claim 3, wherein the first reinforcing portion (43) and the second reinforcing portion (44) are separately glued to the substrate (42), and the first reinforcing portion (43) and the second reinforcing portion (44) adopt a bracket formed by extrusion molding of a combination material of glass fiber and epoxy resin.

14. The battery module of claim 2, wherein the second reinforcing portion (44) is hollow disposed, a through groove is disposed within the second reinforcing portion (44), and the through groove extends in the first direction and penetrates through two sides of the second reinforcing portion (44) in the first direction.

15. An automobile, comprising a vehicle frame (8) and the battery module of any one of claims 1 to 14, wherein the battery module is detachably connected to a bottom of the vehicle frame, and a box cover (3) of the battery module is a bottom plate of the automobile.
